# EUROPEAN PATENT SPECIFICATION

(11) **EP 1 138 433 B1**
(45) Date of publication and mention of the grant of the patent: **01.09.2004**
(21) Application number: 01302963.2
(22) Date of filing: 29.03.2001
(51) Int. Cl.: B23P 21/00

(54) **A product disassembling and assembling system and a method of disassembling and assembling the product**
System und Verfahren zur Demontage und Montage eines Produkts
Un système et un procédé pour le démontage et l'assemblage d'un produit

(30) Priority: 29.03.2000 JP 2000092387
(43) Date of publication of application: 04.10.2001
(73) Proprietor: Ricoh Company Ltd., Tokyo 143-8555 (JP)
(72) Inventor: Maruyama, Tooru, Ohta-ku, Tokyo 143-8555 (JP); Shinozaki, Kenichi, Ohta-ku, Tokyo 143-8555 (JP)
(74) Representative: Lamb, Martin John Carstairs

(56) References cited:
- EP-A- 0 596 509
- PATENT ABSTRACTS OF JAPAN vol. 1999, no. 14, 22 December 1999 (1999-12-22) & JP 11 239926 A (CANON INC), 7 September 1999 (1999-09-07)
- PATENT ABSTRACTS OF JAPAN vol. 1998, no. 03, 27 February 1998 (1998-02-27) & JP 09 300144 A (RICOH CO LTD), 25 November 1997 (1997-11-25)
- PATENT ABSTRACTS OF JAPAN vol. 2000, no. 01, 31 January 2000 (2000-01-31) & JP 11 291135 A (RICOH CO LTD), 26 October 1999 (1999-10-26)
- PATENT ABSTRACTS OF JAPAN vol. 2000, no. 02, 29 February 2000 (2000-02-29) & JP 11 320296 A (CANON INC), 24 November 1999 (1999-11-24)

## Description

### BACKGROUND OF THE INVENTION

### Field of the Invention

The present invention relates to a product disassembling and assembling system and a method of disassembling and assembling the product.

### Discussion of the Background

In the recent years, the tackling of environmental maintenance has become an urgent business for enterprises. In a specific product such as a copying machine, printer, etc., various sorts of recycling usage have been developed, from the viewpoint of resource saving and effective resource utilization.

Furthermore, there exists a re-manufactured machine as one form (configuration) of the re-utilization of a used product. That is a so-called "second-hand" machine made by the minimum-necessary parts replacement and repairment by performing the outside-view cleaning and partial disassembling. Compared with the newly-made product, the guarantee of the quality is vague. Therefore, the valuation in the market is low and the cost merit is small.

In such a situation, a re-manufactured machine is effectively utilized, and it is proposed that, as a device for enlarging the recycling, the quality of the re-manufactured machine is guaranteed to the same extent as that of the newly-made machine and the re-manufactured machine is put on the market. In other words, the used product withdrawn from the market is disassembled and the parts of the product thus disassembled are cleaned, reproduced, repaired, and checked. Only the parts passing the check standard are put on the production line and used in the re-manufactured machine together with newly-made parts. As the result, the quality of the re-manufactured machine is guaranteed as the same quality as a newly-manufactured machine. In addition, the valuation in the market for the re-manufactured machine is improved. Therefore, it can be expected that the product recycling is enlarged and therefore that largely contributes to energy saving.

In order to produce such a re-manufactured machine, according to the technology disclosed in the published specification of Japanese Laid-open Patent Publication No. 11-239926, it has been already proposed to provide a high-quality and reasonable product recycling system for the disassembling production processes. The system includes a disassembling line for disassembling the main body of the used product and taking out the used parts from the used product, and an assembling line for assembling the new product, a first conveying device for supplying the used parts taken out on the disassembling line to the assembling line, a storage section for storing the new parts, a second conveying device for supplying the new parts from the storage section to the assembling line, and a control device for performing the control operation so as to supply the necessary amount of the new parts from the storage section to the assembling line in accordance with the assembling amount of the new product on the assembling line and the supplying amount of the used parts from the disassembling line.

According to the technology disclosed in the published specification of Japanese Laid-open Patent Publication No. 11-291135, in a system of automatically assembling and disassembling a product by use of an automatic machine for automatically performing many operations, the disassembled parts can be re-used effectively. The system functions as an automatic assembling/disassembling system capable of flexibly coping with being applied to both of the assembling work and the disassembling work without changing the direction of the manufacturing line. The system further judges whether the works to be practiced is the assembling works or the disassembling works from the parts conveyed to the automatic machine. In accordance with the result of the above judgement, the system performs the automatic assembling of the parts and the automatic checking of the product, or performs the automatic disassembling of the parts and the automatic checking of the same parts. The works thus discriminated are selectively practiced in order to discriminate the parts which can be used again.

However, according to the technology disclosed in the published specification of Japanese Laid-open Patent Publication No. 11-239926, it is necessary to prepare, respectively, the disassembling line for disassembling the used product and taking out the used parts at the same time and the assembling line for assembling the new product, for the respective special usage. To state concretely, the throwing-in robot, the conveying device, the disassembling robot, the checking device, and the accommodating device are necessary in the disassembling line, while the throwing-in robot, the conveying device, the disassembling robot, the checking device, and the accommodating device (groups of the same devices) are also necessary in the assembling line.

Furthermore, in the technology disclosed in the published specification of Japanese Laid-open Patent Publication No. 11-291135, in general, if the procedure of assembling the product is parts a, parts b, parts c, the procedure of disassembling the product is the reversed order, namely, parts c, parts b, parts a on almost all occasions. Therefore, the work of assembling the parts a, and the work of disassembling the parts c have to be performed in the same working section, and the toolings for assembling/disassembling may become inevitably complicated. Furthermore, since the assembling line and disassembling line are judged on the lines after conveying the parts, it is necessary to always prepare the parts supplying device for assembling the parts and the parts withdrawing device after disassembling the product. The line structure may become very complicated. The lowering of the respective operation ratio cannot be avoided.

On the other hand, in the future, the withdrawal and re-utilization (re-using) of the product may tend to become the responsibility of the manufacturer. When 100% of the used product is withdrawn, disassembled, and re-used, the quantity of the products may become very large (countless). According to the aforementioned background art, it is estimated that the very large specialized factory is required for disassembling the used product. Therefore, a large economic burden (load) occurs for the new facility investment. The withdrawal amount of the used product largely depends on the economic situation at present and the market tendency. When the withdrawal amount largely varies, the working situation of the aforementioned disassembling special line also largely varies. Therefore, the working may become non-effective. The economic burden and the cost increase of the re-manufactured machine cannot be avoided, in addition to the economic burden. Consequently, there is a risk that the enlargement of the recycling and the energy saving are largely damaged, or hindered.

### SUMMARY OF THE INVENTION

Heretofore, the background arts regarding the product disassembling and assembling system and the method of disassembling and assembling the product have been described. However, according to such the background arts, there exists no advantageous functional effect for improving such a product disassembling and assembling system and method.

The present invention has been made in view of the above-discussed and other problems, and to solve the above-mentioned defects and troublesome matters of the background arts.

To state in more detail, in consideration of the aforementioned problems of the background arts, the present invention aims at providing an improved new product disassembling and assembling system and method. The invention aims to make the entire system compact and reduce the manufacturing cost. The invention aims at further easily realizing the cost reduction of manufacturing the product.

The above aims are met by a product disassembling and assembling system according to claim 1, and a method of disassembling and assembling a product according to claim 11.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
Fig. 1 is a process flow diagram of the product disassembling and assembling system which is an embodiment of the present invention;
Fig. 2 is an overall flow diagram of the product disassembling and assembling system;
Fig. 3 is a concept diagram illustrating the entire works line;
Fig. 4 is another concept diagram illustrating the entire works line;
Fig. 5 is still another concept diagram illustrating the entire works line;
Fig. 6 is a block diagram of the network constructing the entire control system of the product disassembling and assembling system;
Fig. 7 is a flow chart illustrating the process of the host computer constructing the control system; and
Fig. 8 is a flow chart illustrating the process of the respective computers constructing the control system.

### DETAILED DESCRIPTION OF THE PREFERRED EMBODIMENT

In describing the preferred embodiment of the present invention illustrated in the accompanying drawings, specific terminology is employed for the sake of clarity. However, the present invention is not intended to be limited to the specific terminology so selected and it is to be understood that each specific element includes all technical equivalents which operate in a similar manner.

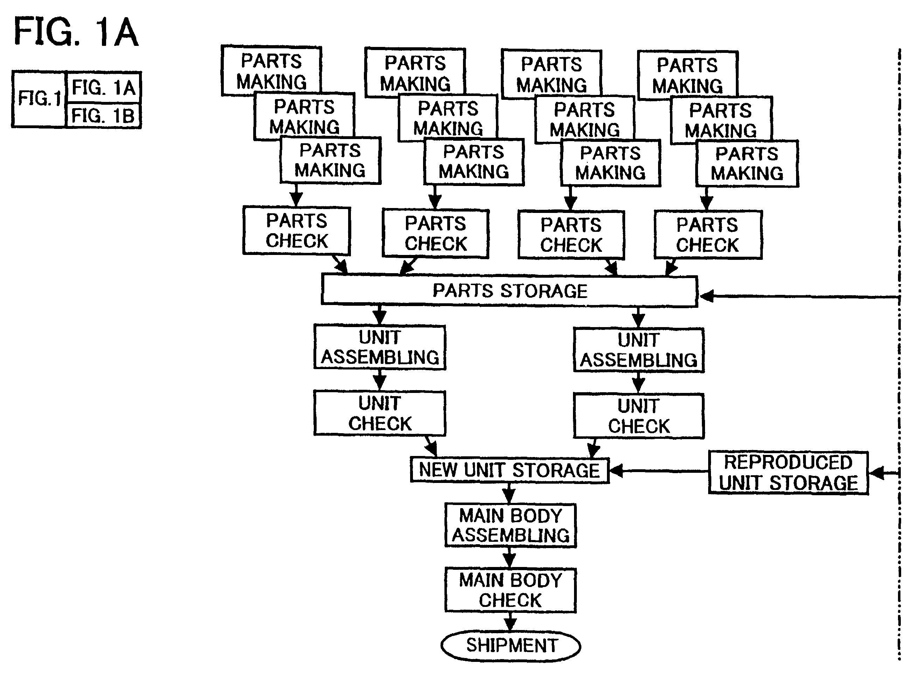

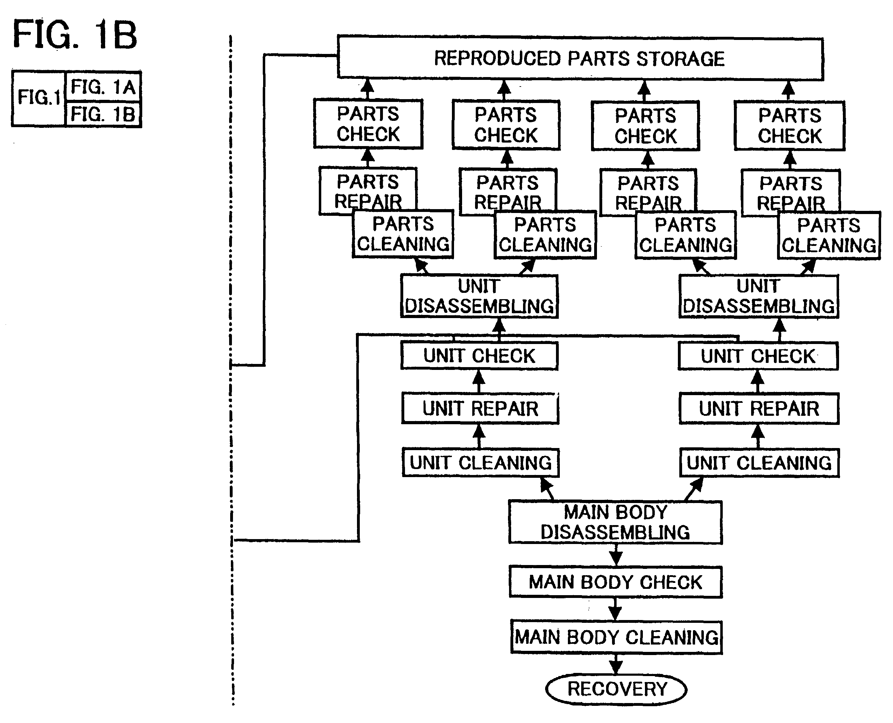

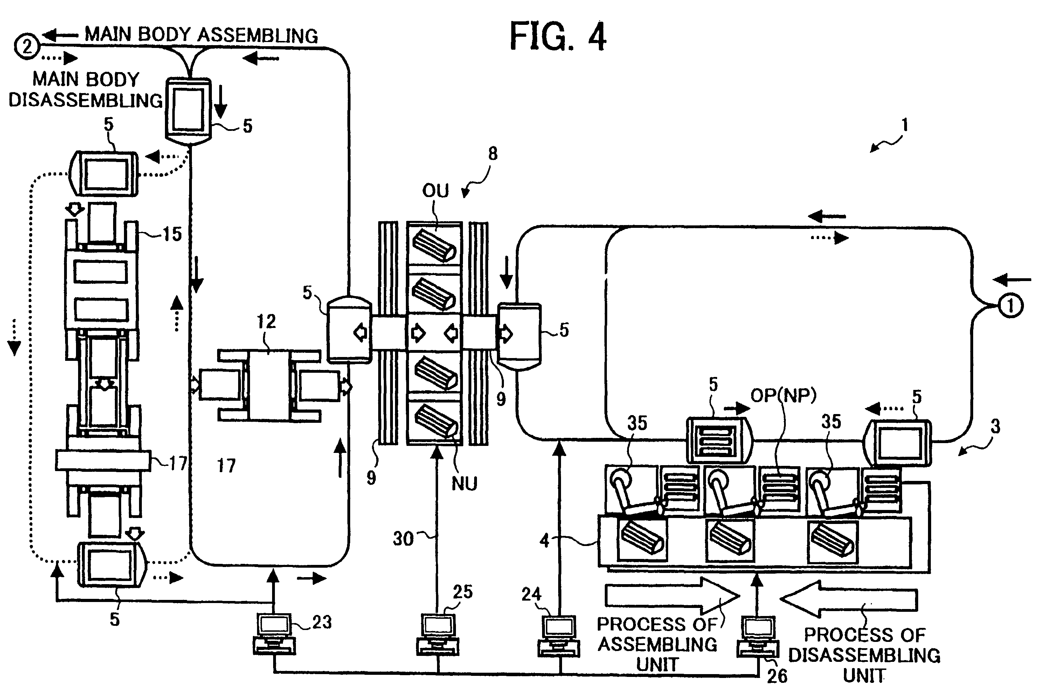

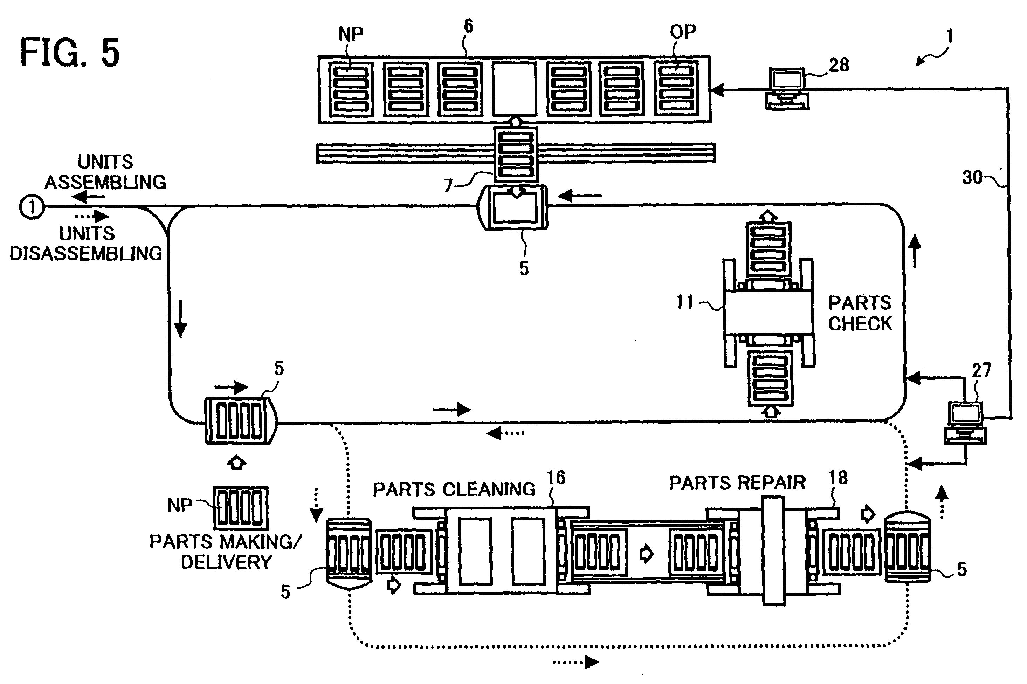

Referring now to the drawings, in which like reference numerals designate identical or corresponding parts throughout the several views, and more particularly to Figs. 1 through 8, a product disassembling and assembling system and a method of disassembling and assembling the product are described in detail, hereinafter.

A product disassembling and assembling system is shown including: a producing facility for producing the product; and a processing facility for performing the process of disassembling the used product and offering the units or parts used for producing said product, in which the units or parts after being processed can be provided for producing said product. The product disassembling and assembling system further comprises a process facility commonly used for practicing both mutually reversible works between the respective product producing steps and the respective process disassembling steps or the same sort of work. The process facility performs said mutually reversible work or same sort of work, thereby the facility performs the mutually reversible operation or same sort operation.

A mutually reversible work between the first process of the producing the product and the second process of disassembling the used product into units and parts is an operation that is carried out in one order in the process of producing the product and the reverse order in the process of disassembling the used products into units and parts.

The same sort work between the first process of producing the product and the second process of disassembling the used product into the units and parts is an operation that is carried out in one order in the first process of producing the product and in the same order in the second process of disassembling the used product into units and parts.

The mutually reversible operation is one which is carried out in a first direction in the facility in the first process and in the reverse direction in the second process.

The same sort of operation is one which is carried out in first direction in the facility in the first process and in the same direction in the second process.

Relating to the product disassembling and assembling system at least one sort among the commonly used facilities is used, which is preferably controlled by a computer. The product disassembling and assembling system further may include a changing-over device for changing over the program employed in the computer and the data employed in the program in the case of performing the production.

A plurality of sorts of commonly used facility may be used which are controlled by the computer. The changing-over device may be capable of performing in a system step the changing-over operation of the plurality of commonly-used facilities.

One sort among the commonly-used facilities may be a main body assembling and disassembling system commonly used in a process of performing the production of assembling the units or parts constructing the product main body and in another process of disassembling the used product into the units or parts.

One sort among said commonly-used facilities may be a unit assembling and disassembling facility commonly used in a process of assembling the parts constructing the product main body and thereby producing the product main body and the units constructing the product main body, and in another process of disassembling the units constructing the used product or the product main body into the parts.

One sort among the commonly-used facilities may be a unit storage chamber commonly used in a process of temporarily preserving the newly-made units constructing the product main body employed for the production and in another process of temporarily preserving the units after disassembling.

One sort among the commonly-used facilities may be a parts storage chamber commonly used in a process of temporarily preserving the newly-made parts constructing the product main body or the units constructing the product main body employed for the production and in another process of temporarily preserving the parts after disassembling.

One sort among the commonly-used facilities may be a unit storage chamber commonly used in a process of temporarily preserving the newly-made units constructing the product main body employed for the production and in another process of temporarily preserving the units after disassembling; and another sort of the commonly-used facilities is a conveying device commonly used in a process of conveying the units from the main body assembling and disassembling facility to the unit storage chamber and in other process of conveying the units from the unit storage chamber to the main body assembling and disassembling facility.

One sort among the commonly-used facilities may be a parts storage chamber commonly used in a process of temporarily preserving the newly-made parts constructing the product main body or the units constructing the product main body employed for the production and in another process of temporarily preserving the parts after disassembling; and another sort of said commonly-used facilities is a conveying device commonly used in a process of conveying the parts from the unit assembling and disassembling facility to the parts storage chamber and in other process of conveying the parts from the parts storage chamber to the unit assembling and disassembling facility.

One sort of the commonly-used facilities may be a main body checking facility commonly used in a process of checking the product main body after producing and in other process of checking the used product main body.

One sort of the commonly-used facilities may be a unit checking facility commonly used in a process of checking the newly-made units constructing the product main body employed for the production and in other process of checking the disassembled units.

One sort of the commonly-used facilities may be a party checking facility commonly used in a process of checking the parts constructing the product main body or the units constructing the product main body employed for said production and in other process of checking the assembled parts.

In the invention, between the work of producing the product and the work of performing the process of disassembling the used product and offering the units and the parts employed for producing the product, the facilities are jointly used for the reversible operation and the same-sort operation. Those jointly-used facilities carry out the reversible work and the same-sort work. Therefore, the same-sort plural facilities can be necessitated, the entire structure of the system can be made compact, and the reduction of the product manufacturing cost can be easily realized.

### EMBODIMENT OF THE INVENTION

An embodiment of the present invention is described hereinafter, referring to the accompanying drawings.

Fig. 1 is a process flow diagram illustrating a product disassembling and assembling system which is the embodiment of the present invention.

The product relating to the present embodiment of the invention is, for instance, a copying machine and a printer, etc. The assembling of the image forming apparatus product such as the copying machine and the printer, etc. is roughly classified into the two assembling steps; the unit assembling step comprising the operation of previously assembling the plural parts such as lens, mirror, roller, bearing, motor, and PCB (printed circuit board) per each function and per each unit, and the main-body assembling step comprising the operation of assembling the plural units in the main body frame.

As shown in Fig. 1, the parts of the product manufactured by the product disassembling and assembling system are made (parts-making). The parts thus made are checked (parts-check). The new parts after checking are stored (new-parts-storage).

On the other hand, a used of the same type product is withdrawn from the market place (withdrawal). The main body of the product is cleaned ( main body cleaning). The cleaned product is checked (main body check). The main body of the product after checking is disassembled into the units (main body disassembling). The respective units after disassembling are cleaned (unit cleaning). The cleaned units are repaired (unit repair). The repaired units are checked (unit check). A part of the units after checking is stored as it is (reproduced unit storage). The other part is further disassembled into parts (unit disassembling). The parts after disassembling are cleaned (parts cleaning). The cleaned parts are repaired (parts repair). The repaired parts are checked (parts check). The checked parts are stored (reproduced parts storage).

The new parts thus stored and the used old parts thus stored are assembled as the unit for the new product (assembling of the unit). The unit thus assembled is checked (unit check). The checked unit is stored (new unit storage).

Both of the new unit made from the new parts or the parts of the used old product stored as mentioned before and the used old unit stored also as mentioned before are assembled as the new product main body (main body assembling) The product main body thus assembled is checked (main body check). The checked product is shipped out (shipment).

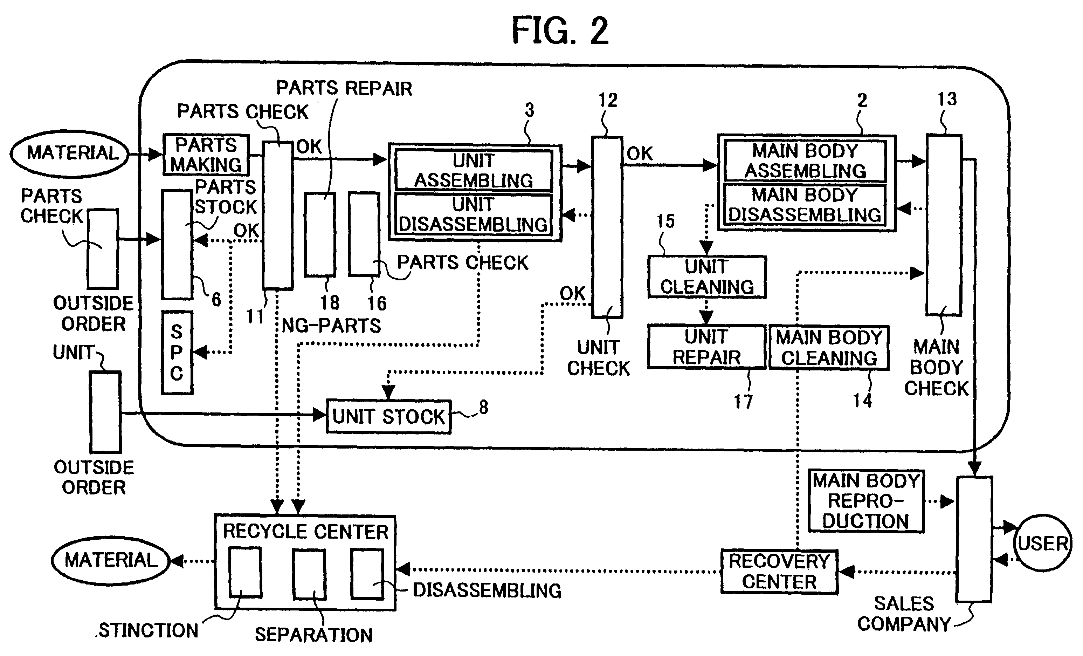

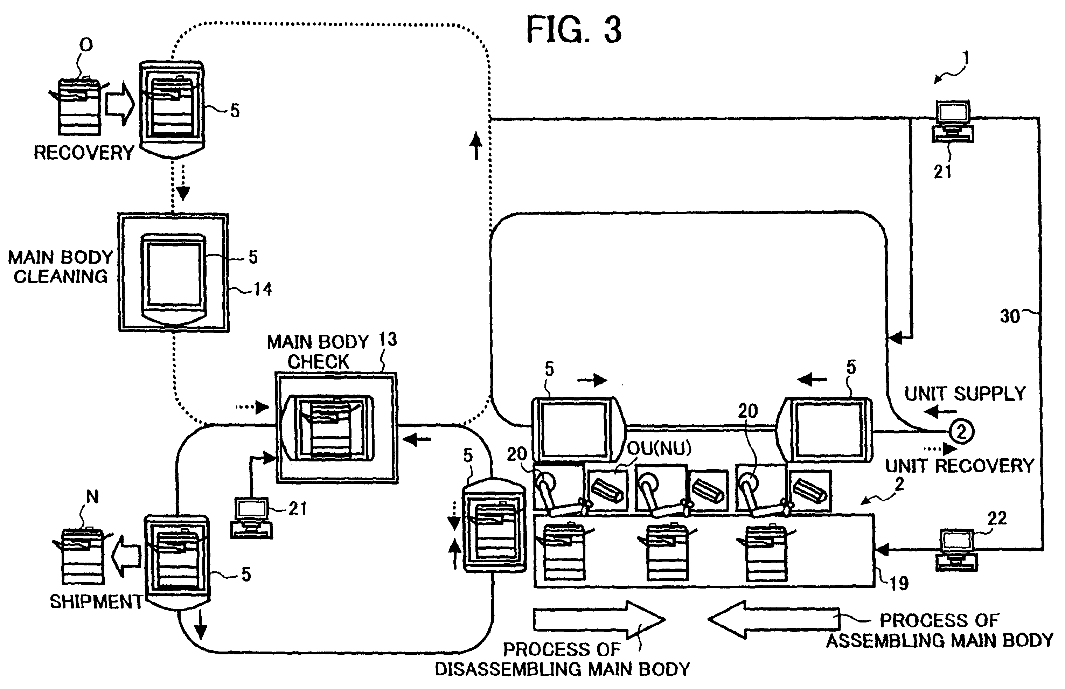

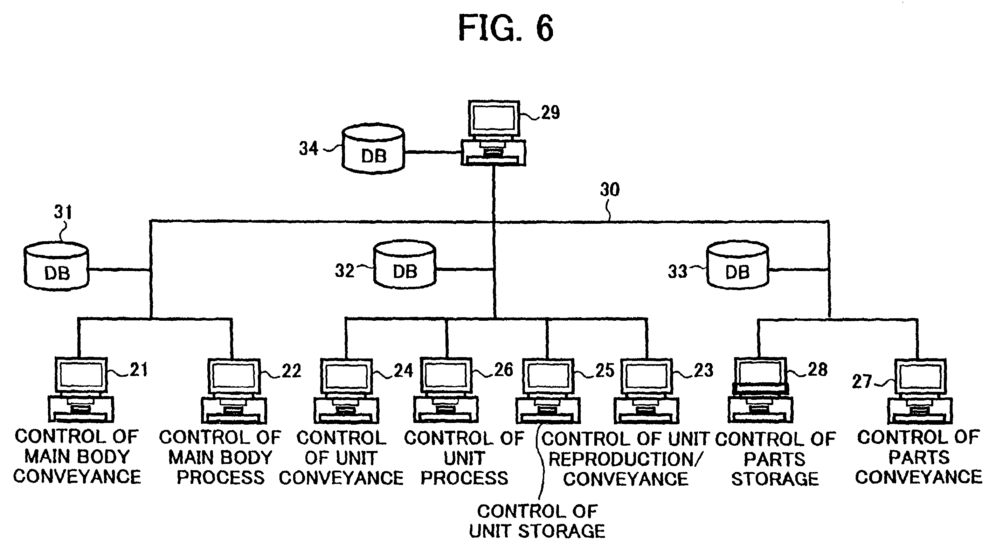

Fig. 2 is the entire flow diagram illustrating the disassembling/assembling system 1 of the product which is the embodiment of the present invention. Figs. 3 through 5 are concept diagrams illustrating the entire works line of the disassembling/assembling system 1. The diagrams are divided into three figures: Fig. 3, Fig. 4, and Fig. 5 for convenience. In the respective figures, Numbers 1 and 2 in circles represent where the respective lines are connected to each other. Figure 6 is a block diagram demonstrating the network constructing the entire control system of the disassembling/assembling system 1 for the product which is the embodiment of the present invention.
As shown in Figs. 2 through 5, the unmanned conveying vehicle (AGV) 5 performs the conveyance of the various sorts of works to the respective portions (sections). The main body disassembling process of disassembling the main body O of the used product and taking out the used units OU is performed on the working line 2. The unit disassembling process of disassembling the used units OU and taking out the used parts OP is performed on the working line 3. The main body assembling process of assembling the new product main body N is performed also on the working line 2. The unit assembling process of assembling the new unit NU is performed also on the working line 3.

The works of conveying the product main body O used in the main body disassembling process and in the main body assembling process on the working line 2 is performed by a conveying device 19 such as the conveyor, etc. On the other hand, the work of conveying the units OU used in the unit disassembling process and in the unit assembling process on the working line 3 is performed by a conveying device 4, such as the conveyor, etc.

On the working line 2, there are arranged in a row the robots 20, 20, ..., controlled by the main body process control computer 22. The robots 20 are arranged in a row along the conveying device 19 for conveying in a direction the product main body N being assembled. On the other hand, on the working line 3, there are arranged in a row the robots 35, 35, ..., controlled by the main body process control computer 22, arranged in a row along the conveying device 4 for conveying in a direction the unit NU being assembled.

The new parts NP and the used parts OP required in the unit assembling process are stored in the parts storage warehouse or parts stock 6. The delivering and the receiving of the parts NP and OP between the parts storage warehouse or parts stock 6 and the unmanned conveying vehicle 5 are performed by a stocker 7. The new unit NU and the used unit OU required in the product main body assembling process are stored in the unit storage warehouse or unit stock 8. The delivering and the receiving of the units NU and OU between the unit storage warehouse 8 and the unmanned conveying vehicle 5 is performed by another stocker 9.

The new parts checking process for performing the quality check of the new parts NP to be supplied for the unit assembling process is performed by the parts check facility 11 employed for the predetermined parts checking. The new unit checking process for performing the quality check of the new unit NU to be supplied for assembling the product main body N is performed by the unit check facility 12 employed for the predetermined unit checking. The final checking process for performing the final check for the product main body N after assembling the product main body N is performed by the main body check facility 13 employed for the predetermined main body checking. Furthermore, the used parts checking process for performing the quality check of the used parts OP in order to reuse the used parts OP is also performed by the parts check facility 11. The reproduced unit checking process for performing the quality check of the used unit OU is also performed by the unit check facility 12. The withdrawn product checking process for performing the quality check of the withdrawn used product main body O is also performed by the main body checking facility 13.

The main body cleaning process for cleaning and removing the dirt attached to and polluting the main part of the product at the times of using, transporting, and storing the used product main body is performed by the main body cleaning facility 14. The unit cleaning process for cleaning and removing the dirt attached to the used units OU is performed by the predetermined unit cleaning facility 15. The parts cleaning process for cleaning and removing the dirt attached to the used parts OP is performed by the predetermined parts cleaning facility 16.

The unit repairing process for restoring the function of the used unit OU in the used product main body, the function of which is deteriorated at the time of using is performed by the unit repair facility 17. The parts repairing process for restoring the function of the used parts OP in the used product main body, the function of which is deteriorated at the time of using is performed by part repair by the repairing facility 18.

The main body assembling and disassembling process performed on the working line 2 and the unit assembling and disassembling processes performed on the working line 3 are the reversible works to each other. The new checking process and the final checking process both performed by the main body check facility 13, the new unit checking process and the reproduced unit checking process both performed by the unit check facility 12, the new parts checking process and the used parts checking process both performed by the parts check facility 11, the temporary storage of the parts NP and that of the parts OP performed by the parts storage warehouse, and the temporary storage of the unit NU and that of the unit OU are the same sorts of works as each other.

Moreover, as shown in Fig. 2, the withdrawal of the used product is performed by the sales company, the withdrawal center, etc., and the waste not capable of being used again occurring at the time of checking the parts or disassembling the unit is treated in the recycling center.

Referring to the Figs. 3 through 6, the control system for controlling the entire operation of the system 1 for disassembling and assembling the product is described hereinafter in detail. At the time of assembling and disassembling the product main body O and the product main body N, the main body conveying vehicle controlling computer 21 performs the control operation of the unmanned conveying vehicle 5 when the product main bodies O and N, and the main body process controlling computer 22 performs the control operation of the working line 2 for assembling and disassembling the product main bodies O and N.

In the works at the time of assembling and disassembling the units OU and NU in the product, when the series of works are performed for reproducing the used unit OU, the unit reproduction and conveyance controlling computer 23 performs the control of the unmanned conveying vehicle 5 when the various sorts of works are automatically conveyed by the unmanned conveying vehicle 5. The unit conveyance controlling computer 24 performs the control of the unmanned conveying vehicle 5, when the delivering and receiving works for the units OU and NU are performed by the unmanned conveying vehicle 5 between the unit storage warehouse 8 and the working line 3. The storage controlling computer 25 controls the storage of the units OU and NU of the product. The unit process controlling computer 26 performs the control of the working line 3 for assembling and disassembling works of the product units OU and NU.

Furthermore, in the works of assembling and disassembling the parts OP and NP, the parts storage controlling computer 27 performs the control of the storage of the parts OP and NP. The parts conveyance controlling computer 28 performs the control of the unmanned conveying vehicle 5 at the time of automatically conveying the newly made and delivered new parts NP or the cleaned, repaired, and checked old used parts OP by the unmanned conveying vehicle 5.

The host computer 29 totally controls all of the respective computers 21 through 28. The host computer 29 and the respective computers 21 through 28 are connected to each other with the floor LAN 30.

The various sorts of data required for performing the series of works in order to assemble and disassemble the product main bodies O and N by use of the main body conveyance controlling computer 21 and the main body process controlling computer 22 are stored in the data base 31. The various sorts of data required for performing the series of works in order to assemble and disassemble the units OU and NU by use of the unit storage controlling computer 23 and the unit conveyance controlling computer 24, the unit storage controlling computer 25, and the unit process controlling computer 26 are stored in the data base 32. The various sorts of data required for performing the control of the parts OP and NP storage and the conveyance thereof are stored in the database 33. The various sorts of data for controlling the entire works performed by the system 1 disassembling and assembling the product are stored in the data base 34.

Next, the works performed by the system 1 for disassembling and assembling the product is described hereinafter.

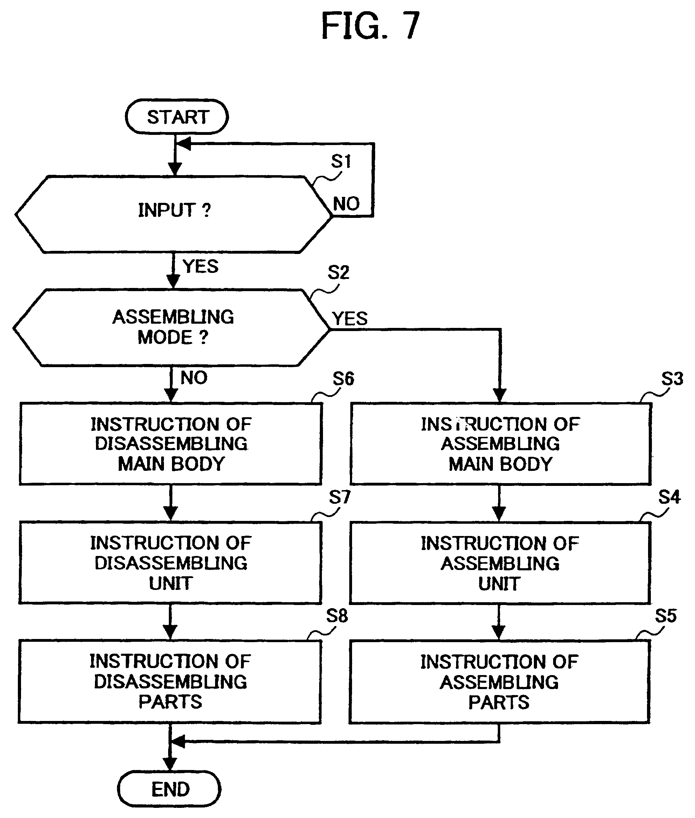

Fig. 7 is a flow chart illustrating the treatment performed by the host computer 29. In the product disassembling and assembling system 1, the assembling mode for performing the works of assembling the main body of the product O by use of the above facility and the disassembling mode for performing the works of disassembling the main body of the product O by use of the above facility can be selectively practiced. The selection of the assembling mode and the disassembling mode is performed by the predetermined operation of the host computer 29.

As shown in Fig. 7, the host computer 29 realizes the changing-over device. When the selection of the assembling mode or the disassembling mode is inputted (Step S1, Y), the selection on whether the mode is the assembling mode or the disassembling mode is judged (Step S2). Furthermore, when the selection of the assembling mode or the disassembling mode is inputted, the sorts (models) of the product main body N, the number of the manufactured products, or the other various matters can be additionally set.

When the assembling mode is selected (Step S2, Y), the product disassembling and assembling system 1 is set such that the works for assembling the product main body N can be practiced. Namely, in accordance with the production plan stored in the data base 34, the practice of the works of assembling the product main body N is instructed to the main body conveyance controlling computer 21 and the main body process controlling computer 22 (Step S3). Furthermore, in accordance with the production plan, the practice of the works of assembling the unit NU is instructed to the unit reproduction and conveyance controlling computer 23, the unit conveyance controlling computer 24, the unit storage controlling computer 25, and the unit process controlling computer 26 (Step S4). Furthermore, in accordance with the production plan, the practice of the works of preparing the parts NP and OP is instructed to the parts conveyance controlling computer 27 and the parts storage controlling computer 28 (Step S5).

When the disassembling mode is selected (Step S2, N), the product disassembling and assembling system 1 is set such that the series of works for disassembling the main body of the product O can be practiced. Namely, in accordance with the reproduction plan stored in the data base 34, the practice of the works of assembling the unit OU is instructed to the main body conveyance controlling computer 21, and the main body process controlling computer 22 (Step S6). Furthermore, in accordance with the production plan, the practice of the works of disassembling the unit OU is instructed to the unit reproduction and conveyance controlling computer 23, the unit conveyance controlling computer 24, the unit storage controlling computer 25, and the unit process controlling computer 26 (Step S7). Furthermore, in accordance with the production plan, the practice of the works of purchasing and storing the parts NP and OP is instructed to the parts conveyance controlling computer 27 and the parts storage controlling computer 28 (Step S8).

Next, the processings are performed by the host computer 29 shown in Fig. 7, and thereafter the respective computers 21 through 27 perform the processing. The operation thereof is described hereinafter.

At first, the processing performed by the main body conveyance controlling computer 21 and the main body process controlling computer 22 in the assembling mode is described hereinafter.

The information regarding the various models of the product capable of manufacturing in the present system 1 (model information), the information regarding the respective units OU and NU required for assembling the respective models (units information per models), the information regarding the concrete procedure of assembling the product main body N by use of the respective units OU and NU (main body assembling procedure), the information regarding the storage of the respective units OU and NU in the unit storage warehouse 8 (unit storage information), the information regarding the conveyance path of the unmanned conveying vehicle 5 for conveying the units OU and NU prepared in the unit storage warehouse 8 to the working line 2 (unit conveyance path information), the information regarding the conveyance path of the unmanned conveying vehicle 5 for conveying the product main body N assembled in the working line 2 (main body conveyance path information), the information regarding the quality required for performing the check of the assembled main body N with the checking device prepared in the main body check facility 13 (main body check and quality information) are respectively stored in the data base 31.

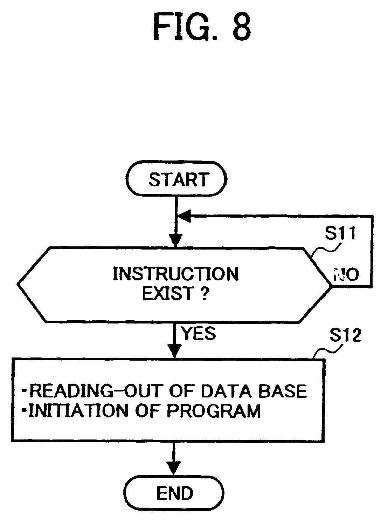

As shown in Fig. 8, when the detailed setting information such as the instruction (command) of practicing the assembling mode and the sort of the product main body N to be manufactured is received from the host computer 29 (Step S11), the main body process controlling computer 22 reads out the necessary information such as the model information, machine model unit information, the main body assembling procedure, the main body check quality information, etc. from the data base 31, and the one used in the case of manufacturing the product main body N is raised up (initiated) with the program for controlling the not-shown checking apparatus prepared in the robots 20, 20, ......, the conveying apparatus 19, and the main body check facility 13 (Step S 12).

Furthermore, as shown in Fig. 8, when the detailed setting information such as the instruction of practicing the assembling mode and the sort of the product main body N to be manufactured is received from the host computer 29 (Step S11), the main body conveyance controlling computer 21 reads out the necessary information such as the unit conveying path information, and the main body check quality information from the data base 31 and raises up (initiates) the program for controlling the respective unmanned conveying vehicles 5, 5, ...... (Step S12).

According to the above-mentioned procedures, it is possible to do the works of assembling the product main body N of the predetermined model.

Next, the processes performed by the main body conveyance controlling computer 21 and the main body process controlling computer 22 in the disassembling mode are described.

The information of the various product models which can be disassembled in the present system 1 (models information), the information of the respective units OU after being disassembled per model of the product (product model unit), the information of the concrete procedure of disassembling the product main body N into the respective units OU (main body disassembling procedure), the information of the respective units OU and NU storage in the unit storing warehouse 8 (unit storage information), the information of the conveying path of the unmanned conveying vehicle 5 for conveying the disassembled unit OU to the unit storage warehouse 8, etc. (unit conveying path information), the information of the conveying path of the unmanned conveying vehicle 5 for conveying the product main body O to be disassembled from the main body check facility 13 to the working line 2 (main body conveying path information), and the information of the quality required for checking the product main body O by use of the checking device prepared in the main body check facility 13 (main body checking quality information) are respectively stored in the data base 31.

As shown in Fig. 8, when the detailed setting information such as the instruction (command) for practicing the assembling mode and the sort of the product main body N to be manufactured is received from the host computer 29 (Step S11), the main body process controlling computer 22 reads out the necessary information such as the model information, the machine model unit information, the main body assembling procedure, the main body check quality information, etc. from the data base 31, and the one used in the case of manufacturing the product main body O is raised up (initiated) with the program for controlling the not-shown checking apparatus prepared in the robots 20, 20, ......, the conveying apparatus 19, and the main body check facility 13 (Step S12).

Furthermore, as shown in Fig. 8, when the detailed setting information such as the instruction of practicing the assembling mode and the sort of the product main body N to be manufactured is received from the host computer 29 (Step S11), the main body conveyance controlling computer 21 reads out the necessary information such as the unit conveying path information, and the main body check quality information from the data base 31 and raises up (initiates) the one employed in the case of disassembling the product main body O with the program for controlling the respective unmanned conveying vehicles 5, 5, ...... (Step S12).

According to the above-mentioned procedures, it is possible to do the works of assembling the product main body O of the predetermined model.

Next, the host computer 29 performs the process of Fig. 7. Thereafter, the unit reproduction and conveyance controlling computer 23, the unit conveyance controlling computer 24, the unit storage controlling computer 25, and the unit process controlling computer 26 perform the respective processings. The operations performed by those computers are respectively described hereinafter.

The information regarding the units OU and NU of the various models of the product capable of being manufactured in the present system 1 (model information), the information regarding the respective parts OP and NP required for assembling the unit NU of the respective models (units information per models), the information regarding the concrete procedure of assembling the respective units NU by use of the respective parts OP and NP (unit assembling procedure), the information regarding the storage of the respective parts OP and NP in the parts storage warehouse 6 (parts storage information), the information regarding the conveyance path of the unmanned conveying vehicle 5 for conveying the parts OP and NP prepared in the parts storage warehouse 6 to the working line 3 by use of the unmanned vehicle 5 and for conveying the unit NU after manufacturing to the unit check facility 12 (unit conveying path information), and the information regarding the quality required for performing the check of the unit NU after assembling by use of the unit check facility 12 (unit checking quality information), are respectively stored in the data base 32.

As shown in Fig. 8, when the detailed setting information such as the instruction (command) for practicing the assembling mode and the sort of the product main body N to be manufactured is received from the host computer 29 (Step S11), the unit process controlling computer 26 reads out the necessary information such as the model (sort) information, the model unit information, the unit assembling procedure information, and the unit checking quality information, etc. from the data base 32. The one employed for manufacturing the unit NU with the program for controlling the checking device not shown prepared in the robots 35, 35, ......, the conveying device 4, and the unit check facility 12 is raised up initiated (Step S12).

Furthermore, as shown in Fig. 8, when the detailed setting information such as the instruction for practicing the assembling mode and the sort of the product main body N to be manufactured is received from the host computer 29 (Step S11), the unit conveyance controlling computer 24 reads out the necessary information such as the unit conveying path information from the data base 32 and the program for controlling the respective unmanned conveying vehicles 5, 5, ...... employed in the case of manufacturing the unit NU (Step S12).

As shown in Fig. 8, when the detailed setting information such as the instruction (command) for practicing the assembling mode and the sort of the product main body N to be manufactured is received from the host computer 29 (Step S11), the unit reproduction conveyance controlling computer 23 reads out the necessary information such as the unit conveying path information from the data base 32, and the read-out information is employed in the case of manufacturing the unit NU. At this time, the program for controlling the respective unmanned conveying vehicles 5, 5, ......, is initiated (Step S12).

As shown in Fig. 8, when the detailed setting information such as the instruction (command) of practicing the assembling mode and the sort of the product main body N to be manufactured is received from the host computer 29 (Step S11), the unit storage controlling computer 25 reads out the parts storage information from the data base 32, and the control program for controlling the unit storage warehouse 8 is initiated (step 12)

According to the procedure mentioned heretofore, the works of assembling the unit NU for the product of the predetermined model can be performed on the working line 3.

Next, the host computer 29 performs the processings of Fig. 7, and thereafter, the unit reproduction and conveyance controlling computer 23, the unit conveyance controlling computer 24, the unit storage controlling computer 25, and the unit process controlling computer 26 perform the respective processing. The operations thereof are described hereinafter.

The information regarding the various models unit OU of the product capable of being disassembled in the present system 1 (Model Information), the information regarding the respective parts OP after disassembling the unit NU for the respective models (models unit information), the information regarding the concrete procedure of disassembling the respective units OU into the respective parts OP (unit disassembling procedure), the information regarding the storage of the respective parts OP and NP in the parts storage warehouse 6 (parts storage information), the information regarding the path of the unmanned conveying vehicle 5 for conveying the disassembled unit OU to the unit check facility 12 or the parts storage warehouse 6 (unit conveying path information), the information regarding the quality required for performing the check of the disassembled unit OU by use of the checking device prepared in the unit check facility 12 (unit checking quality information) are respectively stored.

Furthermore, as shown in Fig. 8, when the detailed setting information such as the instruction for practicing the assembling mode and the sort of the product main body N to be manufactured is received from the host computer 29 (Step S11), the unit process controlling computer 26 reads out the necessary information such as the model (sort) information, the model unit information, the unit assembling procedure information, and the unit checking quality information, etc. from the data base 32. The one employed for disassembling the unit OU with the program for controlling the checking device not shown prepared in the robots 35, 35, ......, the conveying device 4, and the unit check facility 12 is raised up initiated (Step S12).

Furthermore, as shown in Fig. 8, when the detailed setting information such as the instruction for practicing the assembling mode and the sort of the product main body N to be manufactured is received from the host computer 29 (Step S11), the unit conveyance controlling computer 24 reads out the necessary information such as the unit conveying path information from the data base 32, and the program for controlling the unmanned conveying vehicles 5, 5, ......, employed in the case of disassembling the unit NU is initiated (Step S12).

Furthermore, as shown in Fig. 8, when the detailed setting information such as the instruction of practicing the assembling mode and the sort of the product main body N to be manufactured is received from the host computer 29 (Step S11), the unit reproduction and conveyance controlling computer 23 reads out the necessary information such as the unit conveying path information from the data base 32, and the program for controlling the unmanned conveying vehicles 5, 5, ...... employed in the case of disassembling the unit NU is initiated (Step S12).

Furthermore, as shown in Fig. 8, when the detailed setting information such as the instruction of practicing the assembling mode and the sort of the product main body N to be manufactured is received from the host computer 29 (Step S11), the unit storage controlling computer 25 reads out the parts storage information from the data base 32, and the control program of controlling the parts storage warehouse 6 is initiated (Step S12).

In accordance with the above-mentioned procedure, it is possible to do the works of disassembling the unit NU for the product of the predetermined model.

Next, the host computer 29 performs the processing of Fig. 7, and thereafter the parts storage controlling computer 28 and the parts conveyance controlling computer 27 perform the respective processing. The operations thereof are described hereinafter.

The information regarding the parts NP and OP constructing the respective units NU and OU of the respective models of the product main body N (models parts information), the information regarding the control of the storage of the parts NP and OP in the parts storage warehouse 6 (parts storage information), the information regarding the path of the unmanned conveying vehicle 5 for conveying the parts NP and OP existing in the parts storing warehouse 6 and the parts NP onto the working line 3, etc. are stored in the data base 33.

As shown in Fig. 8, when the detailed setting information such as the instruction for practicing the assembling mode and the sort (model) of the product main body N to be manufactured is received from the host computer 29 (Step S11), the parts storage controlling computer 28 reads out the information of the model parts and the information of the parts storage and initiate the control program for controlling the parts storage warehouse 6 (Step S12).

Furthermore, as shown in Fig. 8, when the detailed setting information such as the instruction for practicing the assembling mode and the sort (model) of the product main body N to be manufactured is received from the host computer 29 (Step S11), the necessary information such as the parts conveying path information is read out from the data base 33, and the program for controlling the respective unmanned conveying vehicles 5, 5, ......, employed in the case of conveying the parts NP and OP (Step S12).

In accordance with the above-mentioned procedure, the works of conveying the parts NP and OP for the product of the predetermined model.

Next, the host computer 29 performs the processing of Fig. 7, and thereafter the parts storage controlling computer 28 and the parts conveyance controlling computer 27 perform the respective processing. The operations thereof are described hereinafter.

The information regarding the parts NP and OP constructing the respective units NU and OU of the respective models of the product main body N (models parts information), the information regarding the control of the storage of the parts NP and OP in the parts storage warehouse 6 (parts storage information), and the information of the path for the unmanned conveying vehicle 5 conveying the parts NP and OP after being assembled in the working line 3 into the parts storage warehouse 6 (parts conveying path information), etc. are stored in the data base 33.

As shown in Fig. 8, when the detailed setting information such as the instruction for practicing the disassembling mode and the sort of the product main body N to be manufactured is received from the host computer 29 (Step S11), the parts storage controlling computer 28 reads out the model parts information and the parts storage information and initiates the control program for controlling the parts storage warehouse 6 (Step S12).

Furthermore, as shown in Fig. 8, when the detailed setting information such as the instruction for practicing the disassembling mode and the sort of the product main body N to be manufactured is received from the host computer 29 (Step S11), the necessary information such as the parts conveying path information is read out from the data base 33, and the program for controlling the respective unmanned conveying vehicles 5, 5, ......, employed in the case of conveying the parts NP and OP after being disassembled on the working line 3 into the parts storage warehouse 6 (Step S12).

In accordance with the above-mentioned procedure, the works of conveying the parts OP for the product of the predetermined model can be done.

By performing the processing of Fig. 7 and Fig. 8 as described heretofore, the works mentioned below can be done in the present system 1.

At first, on the working line 2, in accordance with the production plan and the reproduction plan both stored in the data base 34, the units NU and OU are automatically assembled in order on the main body frame by the co-operation of the robot 20 and the conveying device 19 with the assembling mode of the apparatus main body N. The assembling is done by use of the fastening member such as screws, snap fits, etc. Furthermore, in the disassembling mode, the fastened state of the used apparatus main body O by use of the screws and the snap fits, etc. is released in the reverse order to that of the assembling mode. The used unit OU is taken out from the main body and put on the unmanned conveying vehicle 5 serving as the conveying device.

The conveying device 19 conveys the main body frame in the positive (normal) direction of assembling in order the units NU and OU onto the main body frame, in the assembling mode. On the other hand, the device 19 conveys the used apparatus main body O in the reverse direction to that of the assembling mode, in the disassembling mode. Generally, the conveying device 19 uses the conveying conveyor. However, the flatcar or the unmanned conveying car (AGV) can be used instead of the conveyor.

When the apparatus main body N is assembled on the working line 2 which is the main body assembling/disassembling facility, the units NU and OU of the necessary number stored in the unit storage warehouse 8 are moved onto the working line 2, as occasion demands. When the apparatus main body O is disassembled on the working line 2, the used unit OU is automatically disassembled and taken out by the co-operation of the robot 20 and the conveying device 19 and is conveyed to the cleaning facility 15, the repairing facility 17, the unit check facility 12, the working line 3, and the unit storage warehouse 8.

On the working line 3 which is the unit assembling/ disassembling facility, the parts OP and NP are automatically assembled in order on the unit frame, in the assembling mode, by the co-operation of the robot 35 and the conveying device 4. The assembling is done by use of the fastening member such as screws, snap fits, etc. On the other hand, in the disassembling mode, the fastened state of the unit OU by use of the screws and the snap fits, etc. is released in the reverse order to that of the assembling mode. The used parts OP is taken out in order from the unit OU and put on the unmanned conveying vehicle 5 serving as the conveying device.

In the assembling mode, the conveying device 4 conveys in order the parts OP and NP in the positive (normal) direction of assembling them onto the unit frame. On the other hand, in the disassembling mode, the conveying device 4 conveys the used unit OU in the reverse direction to that of the assembling mode. Generally, the conveying conveyor is used as the conveying device 4. However, the flatcar or the unmanned conveying car (AGV) can be used instead of the conveyor.

In the assembling mode, the unmanned conveying vehicle 5 conveys the parts OP and NP of necessary number previously stored in the parts storage warehouse 6 onto the working line, as occasion demands. In the disassembling mode, the used parts OP taken out on the working line 3 are conveyed to the respective facilities of the subsequent processes; the cleaning facility 15, the repairing facility 17, the unit check facility 12, and the parts storage warehouse 6.

Even though the product main body N after manufacturing is the re-produced machine assembled by use of the units OU and the parts OP, in order to guarantee the same quality as that of the newly-produced machine, after performing the reproducing treatment of the used product withdrawn from the market place; such as disassembling, cleaning, and repairing, etc., the product is finally checked. Both of the units OU and the parts OP are thrown into the conventional production line and employed in the machine to be reproduced.

Mainly, regarding the check for assembling the new product main body and the check for disassembling the withdrawn used product main body O reusing the unit OU and the parts OP, in the part level, the unit level, and the main body level, almost all of the check items, devices and facilities etc can be mode common. Furthermore, as to the withdrawn and used product, the usage career per product differs from each other by other matter of course. In the aforementioned check in the disassembling mode, the data; name of the apparatus, model, manufacturing number, installment time, installment environment, usage frequency (number of the copied sheets), trouble career, parts exchanging, the actual usage results (records) accumulated during the time period when the product main body O is used; such as name of the apparatus, model, manufacturing number, installment time, installment environment, usage frequency (number of the copied sheets), trouble career, and parts exchanging career, etc. are utilized, and the checking and judgement on whether the product should be used again is performed.

To state more concretely, the main body check facility 13 performs the final checking; the image checking of the product, and the electric check, etc. after assembling the main body N. In the process of performing the quality assurance of the product and the process of checking whether the product can be used again after cleaning the withdrawn used product main body O, the checking item, device, and the facility can be made common.

Regarding the unit check facility 12, in the process of checking the unit property and the unit function of a respective new unit NU to be supplied for assembling the main body N and the process of checking the unit property and the unit function on whether a unit OU can be used again after disassembling and taking out of the used product main body O and performing the reproduction treatments such as the cleaning and the repairment of the taken-out used unit OU, the checking item, device, and the facility can be made common. To state more definitely in other words, the unit check facility 12 commonly utilizes the check item, the device, or the apparatus, in a process of performing the check of the unit property and the unit function of respective new units to be supplied for assembling the main body N, and in another process of performing the check of the unit property and the unit function on whether the used unit OU can be re-used after performing the reproducing treatment, such as the cleaning, repairing, etc., of the used unit OU obtained by disassembling the used product main body O and taking out the used unit OU therefrom.

The parts check facility 11 causes the checking item, device, and facility to be used commonly, in the process of performing the mechanical check of the outer appearance, shape, and size, etc. of a new part NP and the other check of the electrical characteristic and the optical characteristic for the new parts NP newly processed and manufactured in order to supply them for assembling the unit NU, and in the process of disassembling the used unit OU and performing the mechanical check of the outer appearance, shape, and size, etc. on whether the parts OP can be re-used after performing the reproducing treatment such as the cleaning and repairment, etc., of the used parts taken out therefrom.

The new parts NP for assembling the new product main body N are manufactured and conveyed to the parts check facility 11. The quality of the new parts is checked by the parts check facility 11. Thereafter, the checked parts are conveyed into the parts storage warehouse 6 and stored therein temporarily. On the other hand, the used product main body O, and the reproducing treatment of the taken-out used parts OP such as cleaning and repairing, etc. is performed. Thereafter, the reproduced parts check on whether the parts OP can be re-used is performed by the parts check facility 11. Thereafter, as in the case of the new parts NP, the respective sorts of parts are conveyed to the parts storage warehouse 6 and temporarily stored therein. As mentioned before, in order to assure the same quality as that of the newly-made machine even though the product is the re-manufactured machine, the used parts OP withdrawn from the market place and treated with the reproducing process are checked in the same manner as that of the new parts NP and thereby the quality can be assured. Therefore, in the parts storage warehouse 6, it is not necessary to attempt to distinguish the new parts NP from the reproduced parts OP and store them in the warehouse 6. The common storage warehouse can be used. It is desirable to use shelf, rack, flatcar, automatic warehouse, etc.

The unit NU for assembling the new product main body N is assembled in order on the working line 3. The quality thereof is checked by the unit check facility 12. Thereafter, the respective sorts of unit are conveyed to the unit storage warehouse 8 and temporarily stored therein. On the other hand, the used product main body O is disassembled and the used unit OU taken out therefrom is treated with the reproducing process of cleaning and repairing, etc. Thereafter, as in the case of the new unit NU, the unit OU is conveyed to the unit storage warehouse 8 and temporarily stored therein. As mentioned before, in order to assure the same quality as that of the newly-made machine even though the product is the re-manufactured machine, the used units OU withdrawn from the market place and treated with the reproducing process are checked in the same manner as that of the new unit NU and thereby the quality can be assured. Therefore, in the unit storage warehouse 8, it is not necessary to attempt to distinguish new units NU from reproduced units OU and store them in the warehouse 6. The common storage warehouse can be used. It is desirable to use shelf, rack, flatcar, automatic warehouse, etc.

According to the aforementioned system 1 of disassembling and assembling the product, between the works of producing the new product main body N and the works of disassembling the used product main body O and performing the process of offering the unit OU or the parts OP both used for producing the product, the used facilities 3 which are, in the embodiment, the working lines 2 and 3, the check facilities 11, 12, and 13, and the storage warehouses 6 and 8 are jointly used, regarding the reversible works such as the assembling of the product main body N and the disassembling of the product main body O, and the assembling of the unit NU and the disassembling of the unit OU; the checking works of the product main bodies N and O, the units NU and OU, and the parts NP and OP; and the same-sort temporary storing works of the units NU and OU and the parts NP and OP. Those jointly-used facilities mutually perform reversible operations or same-sort operations. Consequently, that results in making the installation of a plurality of similar facilities unnecessary. Furthermore, it is possible to simply realize the compact structure of the entire system and the reduction of the product manufacturing cost.

Furthermore, since the host computer 29 controls, in a single step, the usage of the program and the various-sorts of data employed in those facilities, the reduction of the product manufacturing cost can be easily realized.

The preferred embodiment of the present invention and the advantageous functional effects thereof over the background arts have been described heretofore. However, numerous additional modifications and variations of the present invention are possible in light of the above teachings. It is therefore to be understood that, within the scope of the appended claims, the present invention may be practiced otherwise than as specifically described herein.

## Claims

1. A product disassembling and assembling system comprising:
a production facility for performing a first process of producing a product (N); and
a first processing facility for performing a second process of disassembling a used product (O) into units (OU) and parts (OP) and offering the units (OU) and parts (OP) thus disassembled for producing the product (NP),
wherein said product disassembling and assembling system further comprises a commonly used processing facility adapted to be commonly used for practicing both mutually reversible work and same-sort work between said first process of producing the product (N) and said second process of disassembling the used product (O) into the units (OU) and parts (OP) wherein said commonly used processing facility is configured to perform the mutually reversible work and the same-sort work by practicing a reversible operation and a same-sort operation, **characterised in that** said commonly used facility practices mutually reversible work using a main body assembling and disassembling facility (2) commonly used in a process of performing the first process of production by assembling the units (NU) and parts (NP) constructing the product main body (N) and in the second process of disassembling said used product (O) into the units (OU) and parts (OP), or using.
a unit assembling and disassembling facility (3) commonly used in the first process of assembling the parts (NP) constructing the units and in the second process of disassembling the units (OU) into parts (OD) or using both.

2. The product disassembling and assembling system as defined in claim 1, comprising at least one sort of commonly used facility which is configured to be controlled by a computer (22), and
wherein said product disassembling and assembling system further comprises a changing-over device for changing over the program employed in said computer (22) and the data employed in said program in order to perform said first process of producing the product (N), or to perform said second process of disassembling the used product (O) into units (OU) and parts (OP) and offering the units and parts thus disassembled for producing the product (N).

3. The product disassembling and assembling system as defined in claim 2, comprising a said plurality of sorts of commonly used facility, which are configured to be controlled by said computer (22), and
wherein said changing-over device is capable of performing, in a single system, said changing-over operation of said plurality commonly-used facilities.

4. The product disassembling and assembling system as defined in any one of claims 1 through 3,
wherein the commonly-used processing facility practices same sort work using a unit storage warehouse (6) commonly used in a process of temporarily preserving the newly-made units (NU) constructing the product main body (N) employed for the production and in another process of temporarily preserving the units (OU) after disassembling.

5. The product disassembling and assembling system as defined in any one of claims 1 through 4,
wherein the commonly-used processing facility practices same sort working using a parts storage warehouse (8) commonly used in a process of temporarily preserving the newly-made parts (NP) constructing the product main body (N) or the units (NU) constructing the product main body (N) employed for the production and in another process of temporarily preserving said parts (OP) after disassembling.

6. The product disassembling and assembling system as defined in claim 1,
wherein the commonly-used processing facility carries out same sort work using a unit storage warehouse (6) commonly used in a process of temporarily preserving the newly-made units (NU) constructing the product main body (N) employed for the production and in another process of temporarily preserving the unit (OU) after disassembling; and
wherein the commonly-used processing facility further carries out same sort work using a conveying device (5) commonly used in a process of conveying the units (OU) from said main body assembling and disassembling facility (2) to said unit storage warehouse (6) and in another process of conveying the units from said unit storage warehouse (6) to said main body assembling and disassembling facility (2).

7. The product disassembling and assembling system as defined in claim 1,
wherein the commonly-used processing facility carries out same sort work using a parts storage warehouse (8) commonly used in a process of temporarily preserving the newly-made parts (NP) constructing the product main body (N) and the units (NU) constructing the product main body (N) employed for the production and in another process of temporarily preserving the parts (OP) after disassembling; and
wherein the commonly-used processing facility carries out same sort work using a conveying device (5) commonly used in a process of conveying the parts (OP) from said unit assembling and disassembling facility (3) to said parts storage warehouse (8) and in another process of conveying the parts (NP) from said parts storage warehouse (8) to said unit assembling and disassembling facility (3).

8. The product disassembling and assembling system as defined in any one of claims 1 through 8,
wherein the commonly-used processing facility carries out same sort work using a main body checking facility (13) commonly used in a process of checking the product main body (N) after the production and in another process of checking the used product main body (O).

9. The product disassembling and assembling system as defined in any one of claims 1 through 8,
wherein the commonly-used processing facility carries out same sort work using a unit checking facility (12) commonly used in a process of checking the newly-made unit (NU) constructing the product main body (N) employed for the production and in another process of checking the disassembled unit (OU).

10. The product disassembling and assembling system as defined in any one of claims 1 through 9,
wherein the commonly-used processing facility carries out same sort work using a parts checking facility (11) commonly used in a process of checking the newly-made parts (NP) constructing the product main body (N) and the unit (NU) constructing the product main body (N) both employed for the production and in another process of checking the parts (OP) after assembling.

11. A method of disassembling and assembling a product comprising the steps of:
performing a first process of producing the product (N) by use of a production facility;
performing a second process of disassembling the used product (O) into units (OU) and parts (OP) by use of a first processing facility; and
offering the units (OU) and parts (OP) thus disassembled for producing the product (N),
wherein a commonly used processing facility is commonly used for practicing both of mutually reversible work and same-sort works between said first process of producing the product (N) and said second process of disassembling the used product (O) into the unit (OU) and parts, (OP) and
wherein said second processing facility performs the reversible work and the same-sort work by practicing a reversible operation and a same-sort operation, **characterised in that** the commonly used processing facility carries out mutually reversible work using a main body assembling and disassembling facility (2) commonly used in the first process of assembling the units (NU) and parts (NP) constructing the product main body (N) and in the second process of disassembling said used product (O) into the units (OU) or parts (OP), or using a unit assembling and disassembling facility (3) commonly used in the first process of assembling the product main body (N) or the unit (NU) constructing the product main body (N) and in the second process of disassembling the units (OU) constructing the used product (O) and the used product main body (O) into parts (OP), or using both.

12. The method of disassembling and assembling a product as defined in claim 11,
comprising using at least one sort of said commonly used facility is controlled by a computer; and
wherein said method of disassembling and assembling a product further comprises the step of changing over the program employed in said computer and the data employed in said program for performing the production process and for performing the disassembling process.

13. The method of disassembling and assembling a product as defined in claim 12,
comprising using a plurality of sorts of commonly used facility which are controlled by said computer; and
wherein said changing-over step is capable of performing, in a single system, the changing-over operation of said plurality commonly-used facilities.

14. The method of disassembling and assembling a product as defined in any one of claims 11 through 13,
wherein the commonly-used processing facility carries out same sort work using a unit storage warehouse (6) commonly used in a process of temporarily preserving newly-made units (NU) for constructing the product main body (N) employed for the production and in another process of temporarily preserving the units (OU) after disassembling.

15. The method of disassembling and assembling a system as defined in any one of claims 11 through 14,
wherein the commonly-used processing facility carries out same sort work using a parts storage warehouse (8) commonly used in a process of temporarily preserving the newly-made parts (NP) constructing the product main body (N) or the unit (NU) constructing the product main body (N) employed for the production and in another process of temporarily preserving the parts (OP) after disassembling.

16. The method of disassembling and assembling a product as defined in claim 11,
wherein the commonly-used processing facility carries out same sort work using a unit storage warehouse (8) commonly used in a process of temporarily preserving the newly-made units (NU) constructing said product main body (N) employed for the production and in another process of temporarily preserving said units (OU) after disassembling; and
wherein the commonly-used processing facility further carries out same sort work using a conveying device (5) commonly used in a process of conveying units (OU) from said main body assembling and disassembling facility (2) to said unit storage warehouse (8) and in another process of conveying units (NU) from said unit storage warehouse (8) to said main body assembling and disassembling facility (2).

17. The method of disassembling and assembling a product as defined in claim 11,
wherein the commonly-used processing facility carries out same sort work using a parts storage warehouse (8) commonly used in a process of temporarily preserving the newly-made parts (NP) constructing the product main body (N) or the units (NU) constructing the product main body (N) employed for the production and in another process of temporarily preserving said parts (OP) after disassembling; and
wherein the commonly-used processing facility carries out same sort work using a conveying device (5) commonly used in a process of conveying the parts (OP) from the said unit assembling and disassembling facility (3) to said parts storage warehouse (8) and in another process of conveying the parts (NP) from said parts storage warehouse (8) to said unit assembling and disassembling facility (3).

18. The method of disassembling and assembling a product as defined in any one of claims 11 through 17,
wherein the commonly-used processing facility carries out same sort work using a main body checking facility (13) commonly used in a process of checking the product main body (N) after the production and in another process of checking the used product main body (O).

19. The method of disassembling and assembling a product as defined in any one of claims 11 through 18,
wherein the commonly-used processing facility carries out same sort work using a unit checking facility (12) commonly used in a process of checking the newly-made unit (NU) constructing the product main body (N) employed for the production and in another process of checking the unit (OU) after disassembling.

20. The method of disassembling and assembling a product as defined in any one of claims 11 through 19,
wherein the commonly-used processing facility carries out same sort work using a parts checking facility (11) commonly used in a process of checking the newly-made parts (NP) constructing the product main body (N) and the units (NU) constructing the product main body (N) employed for the production and in another process of checking said (OP) parts after assembling.

## Patentansprüche

1. System zum Zerlegen und Zusammenbauen von Produkten, umfassend:
eine Herstellungseinrichtung zum Ausführen eines ersten Prozesses zum Herstellen eines Produkts (N); und
eine erste Verarbeitungseinrichtung zum Ausführen eines zweiten Prozesses zum Zerlegen eines verwendeten Produkts (O) in Einheiten (OU) und Teile (OP) und Anbieten der so zerlegten Einheiten (OU) und Teile (OP) zum Herstellen des Produkts (NP),
wobei das System zum Zusammenbauen und Zerlegen von Produkten ferner umfasst: eine gemeinsam verwendete Verarbeitungseinrichtung, die dafür ausgelegt ist, um zur Ausübung von sowohl gegenseitig reversiblen Arbeiten als auch Arbeiten der gleichen Art zwischen dem ersten Prozess zum Herstellen des Produkts (N) und dem zweiten Prozess zum Zerlegen des benutzten Produkts (O) in die Einheiten (OU) und Teile (OP) gemeinsam verwendet zu werden, wobei die gemeinsam verwendete Verarbeitungseinrichtung konfiguriert ist, um die gegenseitig reversiblen Arbeiten und die Arbeiten gleicher Art durch Ausüben eines reversiblen Betriebs und eines Betriebs gleicher Art auszuführen, **dadurch gekennzeichnet, dass** die gemeinsam verwendete Einrichtung gegenseitig reversible Arbeiten ausübt unter Verwendung einer Hauptkörper-Zusammenbau- und Zerlegungseinrichtung (2), die in einem Prozess zum Ausführen des ersten Prozesses zur Herstellung durch Zusammenbauen der Einheit (NU) und Teile (NP), die den Produkthauptkörper (N) konstruieren, und in dem zweiten Prozess zum Zerlegen des benutzten Produkts (O) in die Einheiten (OU) und Teile (OP) gemeinsam verwendet wird, oder unter Verwendung
einer Einheits-Zusammenbau- und Zerlegungseinrichtung (3), die in dem ersten Prozess zum Zusammenbauen der Teile (NP), die die Einheiten (NO) konstruieren, und in dem zweiten Prozess zum Zerlegen der Einheit (OU) in Teile (OP) gemeinsam verwendet werden, oder unter Verwendung von beiden.

2. System zum Zerlegen und Zusammenbauen von Produkten nach Anspruch 1, umfassend wenigstens eine Art von gemeinsam verwendeter Einrichtung, die konfiguriert ist, um von einem Computer (22) gesteuert zu werden, und
wobei das System zum Zerlegen und Zusammenbauen von Produkten ferner eine Umwechseleinrichtung zum Umwechseln des Programms, das in dem Computer (22) verwendet wird, und der Daten, die in dem Programm verwendet werden, umfasst, um den ersten Prozess zum Herstellen des Produkts (N) auszuführen, oder um den zweiten Prozess zum Zerlegen des benutzten Produkts (O) in Einheiten (OU) und Teile (OP) und zum Anbieten der so zerlegten Einheiten und Teile zum Herstellen des Produkts (N) auszuführen.

3. System zum Zerlegen und Zusammenbauen von Produkten nach Anspruch 2, umfassend eine besagte Vielzahl von Arten von gemeinsam verwendeten Einrichtungen, die konfiguriert sind, um von dem Computer (22) gesteuert zu werden, und
wobei die Umwechseleinrichtung in der Lage ist in einem einzelnen System den Umwechselbetrieb der Vielzahl von gemeinsam verwendeten Einrichtungen auszuführen.

4. System zum Zerlegen und Zusammenbauen von Produkten nach irgendeinem der Ansprüche 1 bis 3,
wobei die gemeinsam verwendete Verarbeitungseinrichtung Arbeiten gleicher Art unter Verwendung eines Einheitsspeicherlagers (6) ausübt, das gemeinsam in einem Prozess zum vorübergehenden Aufbewahren der neu-gebildeten Einheiten (NU), die den Produkthauptkörper (N) konstruieren, der für die Herstellung verwendet wird, und in einem anderen Prozess zum vorübergehenden Aufbewahren der Einheiten (OU) nach einer Zerlegung verwendet wird.

5. System zum Zerlegen und Zusammenbauen von Produkten nach irgendeinem der Ansprüche 1 bis 4,
wobei die gemeinsam verwendete Verarbeitungseinrichtung Arbeiten gleicher Art unter Verwendung eines Teilespeicherlagers (8) ausübt, welches gemeinsam in einem Prozess zum vorübergehenden Aufbewahren der neu-gebildeten Teile (NP), die den Produkthauptkörper (N) konstruieren, oder der Einheiten (NU), die den Produkthauptkörper (N) konstruieren, der für die Herstellung verwendet wird, und in einem anderen Prozess zum vorübergehenden Aufbewahren der Teile (OP) nach einer Zerlegung verwendet wird.

6. System zum Zerlegen und Zusammenbauen von Produkten nach Anspruch 1,
wobei die gemeinsam verwendete Verarbeitungseinrichtung Arbeiten gleicher Art unter Verwendung eines Einheitsspeicherlagers (6) ausführt, welches gemeinsam in einem Prozess zum vorübergehenden Aufbewahren der neu-gebildeten Einheiten (NU), die den Produkthauptkörper (N) konstruieren, der für die Herstellung verwendet wird, und in einem anderen Prozess zum vorübergehenden Aufbewahren der Einheit (OU) nach einer Zerlegung verwendet wird; und
wobei die gemeinsam verwendete Verarbeitungseinrichtung ferner Arbeiten gleicher Art unter Verwendung einer Beförderungseinrichtung (5) ausführt, die gemeinsam in einem Prozess zum Befördern der Einheiten (OU) von der Hauptkörper-Zusammenbau- und Zerlegungseinrichtung (2) an das Einheitsspeicherlager (6) und in einem anderen Prozess zum Befördern der Einheiten von dem Einheitsspeicherlager (6) an die Hauptkörper-Zusammenbau- und Zerlegungseinrichtung (2) verwendet wird.

7. System zum Zerlegen und Zusammenbauen von Produkten nach Anspruch 1,
wobei die gemeinsam verwendete Verarbeitungseinrichtung Arbeiten gleicher Art unter Verwendung eines Teilespeicherlagers (8) ausführt, das gemeinsam in einem Prozess zum vorübergehenden Aufbewahren der neu-gebildeten Teile (NP), die den Produkthauptkörper (N) konstruieren, und der Einheiten (NU), die den Produkthauptkörper (N) konstruieren, der für die Herstellung verwendet wird, und in einem anderen Prozess zum vorübergehenden Aufbewahren der Teile (OP) nach einer Zerlegung verwendet wird; und
wobei die gemeinsam verwendete Verarbeitungseinrichtung Arbeiten gleicher Art unter Verwendung einer Beförderungseinrichtung (5) ausführt, die gemeinsam in einem Prozess zum Befördern der Teile (OP) von der Einheits-Zusammenbau- und Zerlegungseinrichtung (3) an das Teilespeicherlager (8) und in einem anderen Prozess zum Befördern der Teile (NP) von dem Teilespeicherlager (8) an die Einheits-Zusammenbau- und Zerlegungseinrichtung (3) verwendet wird.

8. System zum Zerlegen und Zusammenbauen von Produkten nach irgendeinem der Ansprüche 1 bis 8,
wobei die gemeinsam verwendete Verarbeitungseinrichtung Arbeiten gleicher Art unter Verwendung einer Hauptkörper-Überprüfungseinrichtung (13) ausführt, die gemeinsam in einem Prozess zum Überprüfen des Produkthauptkörpers (N) nach der Herstellung und in einem anderen Prozess zum Überprüfen des verwendeten Produkthauptkörpers (O) verwendet wird.

9. System zum Zerlegen und Zusammenbauen von Produkten nach irgendeinem der Ansprüche 1 bis 8,
wobei die gemeinsam verwendete Verarbeitungseinrichtung Arbeiten gleicher Art unter Verwendung einer Einheitsüberprüfungseinrichtung (12) ausführt, die gemeinsam in einem Prozess zum Überprüfen der neu-gebildeten Einheit (NU), die den Produkthauptkörper (N) konstruiert, der für die Produktion verwendet wird, und in einem anderen Prozess zum Überprüfen der zerlegten Einheit (OU) verwendet wird.

10. System zum Zerlegen und Zusammenbauen von Produkten nach irgendeinem der Ansprüche 1 bis 9,
wobei die gemeinsam verwendete Verarbeitungseinrichtung Arbeiten gleicher Art unter Verwendung einer Teileüberprüfungseinrichtung (11) ausführt, die gemeinsam in einem Prozess zum Überprüfen der neu-gebildeten Teile (NP), die den Produkthauptkörper (N) konstruieren, und der Einheit (NU), die den Produkthauptkörper (N) konstruiert, beide verwendet für die Herstellung und in einem anderen Prozess zum Überprüfen der Teile (OP) nach einem Zusammenbau verwendet wird.

11. Verfahren zum Zerlegen und Zusammenbauen eines Produkts, umfassend die folgenden Schritte:
Ausführen eines ersten Prozesses zum Herstellen des Produkts (N) durch Verwendung einer Herstellungseinrichtung;
Ausführen eines zweiten Prozesses zum Zerlegen des verwendeten Produkts (O) in Einheiten (OU) und Teile (OP) durch Verwendung einer ersten Verarbeitungseinrichtung; und
Anbieten der Einheiten (OU) und Teile (OP), die so zerlegt sind, zum Herstellen des Produkts (N),
wobei eine gemeinsam verwendete Verarbeitungseinrichtung gemeinsam verwendet wird zum Ausüben sowohl von gegenseitig reversiblen Arbeiten als auch Arbeiten gleicher Art zwischen dem ersten Prozess zum Herstellen des Produkts (N) und dem zweiten Prozess zum Zerlegen des verwendeten Produkts (O) in die Einheit (OU) und Teile (OP), und
wobei die zweite Verarbeitungseinrichtung die reversiblen Arbeiten und die Arbeiten gleicher Art ausführt durch Ausüben eines reversiblen Betriebs und eines Betriebs gleicher Art, **dadurch gekennzeichnet, dass** die gemeinsam verwendete Verarbeitungseinrichtung gegenseitig reversible Arbeiten ausführt unter Verwendung einer Hauptkorper-Zusammenbau- und Zerlegungseinrichtung (2), die gemeinsam in dem ersten Prozess zum Zusammenbauen der Einheiten (NU) und Teile (NP), die den Produkthauptkörper (N) konstruieren, und in dem zweiten Prozess zum Zerlegen des verwendeten Produkts (O) in die Einheiten (OU) oder Teile (OP) verwendet wird, oder unter Verwendung einer Einheits-Zusammenbau- und Zerlegungseinrichtung (3), die gemeinsam in dem ersten Prozess zum Zusammenbauen des Produkthauptkörpers (N) oder der Einheit (NU), die den Produkthauptkörper (N) konstruiert, und in dem zweiten Prozess zum Zerlegen der Einheiten (OU), die das verwendete Produkt (O) und den verwendeten Produkthauptkörper konstruieren, in Teile (OP) verwendet wird, oder unter Verwendung von beiden.

12. Verfahren zum Zerlegen und Zusammenbauen eines Produkts nach Anspruch 11,
umfassend, dass eine Verwendung von wenigstens einer Art der gemeinsam verwendeten Einrichtung von einem Computer gesteuert wird; und
wobei das Verfahren zum Zerlegen und Zusammenbauen eines Produkts ferner den Schritt zum Umwechseln des Programms, das in dem Computer verwendet wird und der Daten, die in dem Programm verwendet werden, zum Ausführen des Herstellungsprozesses und zum Ausführen des Zerlegungsprozesses umfasst.

13. Verfahren zum Zerlegen und Zusammenbauen eines Produkts nach Anspruch 12,
umfassend eine Verwendung einer Vielzahl von Arten von gemeinsam verwendeten Einrichtungen, die von dem Computer gesteuert werden; und
wobei der Umwechslungs-Schritt in der Lage ist, in einem einzelnen System, den Umwechselbetrieb der Vielzahl von gemeinsam verwendeten Einrichtungen auszuführen.

14. Verfahren zum Zerlegen und Zusammenbauen eines Produkts nach irgendeinem der Ansprüche 11 bis 13,
wobei die gemeinsam verwendete Verarbeitungseinrichtung Arbeiten gleicher Art ausführt unter Verwendung eines Einheitsspeicherlagers (6), das gemeinsam in einem Prozess zum vorübergehenden Aufbewahren von neu-gebildeten Einheiten (NU) zum Konstruieren des Produkthauptkörpers (N), der für die Herstellung verwendet wird, und in einem anderen Prozess zum vorübergehenden Aufbewahren der Einheiten (OU) nach einer Zerlegung verwendet wird.

15. Verfahren zum Zerlegen und Zusammenbauen eines Systems nach irgendeinem der Ansprüche 11 bis 14,
wobei die gemeinsam verwendete Verarbeitungseinrichtung Arbeiten gleicher Art ausführt unter Verwendung eines Teilespeicherlagers (8), das gemeinsam in einem Prozess zum vorübergehenden Aufbewahren der neu-gebildeten Teile (NP), die den Produkthauptkörper (N) konstruieren, oder der Einheit (NU), die den Produkthauptkörper (N) konstruiert, der für die Herstellung verwendet wird, und in einem anderen Prozess zum vorübergehenden Aufbewahren der Teile (OP) nach einer Zerlegung verwendet wird.

16. Verfahren zum Zerlegen und Zusammenbauen eines Produkts nach Anspruch 11,
wobei die gemeinsam verwendete Verarbeitungseinrichtung Arbeiten gleicher Art ausführt unter Verwendung eines Einheitsspeicherlagers (8), das gemeinsam in einem Prozess zum vorübergehenden Aufbewahren der neu-gebildeten Einheiten (NU), die den Produkthauptkörper (N) konstruieren, der für die Herstellung verwendet wird, und in einem anderen Prozess zum vorübergehenden Aufbewahren der Einheiten (OU) nach einer Zerlegung verwendet; und
wobei die gemeinsam verwendete Verarbeitungseinrichtung ferner Arbeiten gleicher Art ausführt unter Verwendung einer Beförderungseinrichtung (5), die gemeinsam in einem Prozess zum Befördern von Einheiten (OU) von der Hauptkörper-Zusammenbau- und Zerlegungseinrichtung (2) an das Einheitsspeicherlager (8) und in einem anderen Prozess zum Befördern von Einheiten (NU) von dem Einheitsspeicherlager (8) an die Hauptkörper-Zusammenbau- und Zerlegungseinrichtung (2) verwendet wird.

17. Verfahren zum Zerlegen und Zusammenbauen eines Produkts nach Anspruch 11,
wobei die gemeinsam verwendete Verarbeitungseinrichtung Arbeiten gleicher Art ausführt unter Verwendung eines Teilespeicherlagers (8), das gemeinsam in einem Prozess zum vorübergehenden Aufbewahren der neu-gebildeten Teile (NP), die den Produkthauptkörper (N) konstruieren, oder der Einheiten (NU), die den Produkthauptkörper (N) konstruieren, der für die Produktion verwendet wird, und in einem anderen Prozess zum vorübergehenden Aufbewahren der Teile (OP) nach einer Zerlegung verwendet wird; und
wobei die gemeinsam verwendete Verarbeitungseinrichtung Arbeiten gleicher Art ausführt unter Verwendung einer Beförderungseinrichtung (5), die gemeinsam in einem Prozess zum Befördern der Teile (OP) von der Einheits-Zusammenbau- und Zerlegungseinrichtung (3) an das Teilespeicherlager (8) und in einem anderen Prozess zum Befördern der Teile (NP) von dem Teilespeicherlager (8) an die Einheits-Zusammenbau- und Zerlegungseinrichtung (3) verwendet wird.

18. Verfahren zum Zerlegen und Zusammenbauen eines Produkts nach irgendeinem der Ansprüche 11 bis 17,
wobei die gemeinsam verwendete Verarbeitungseinrichtung Arbeiten gleicher Art unter Verwendung einer Hauptkörper-Überprüfungseinrichtung (13) ausführt, die gemeinsam in einem Prozess zum Überprüfen des Produkthauptkörpers (N) nach der Herstellung und in einem anderen Prozess zum Überprüfen des verwendeten Produkthauptkörpers (O) verwendet wird.

19. Verfahren zum Zerlegen und Zusammenbauen eines Produkts nach irgendeinem der Ansprüche 11 bis 18,
wobei die gemeinsam verwendete Verarbeitungseinrichtung Arbeiten gleicher Art unter Verwendung einer Einheitsüberprüfungseinrichtung (12) ausführt, die gemeinsam in einem Prozess zum Überprüfen der neu-gebildeten Einheit (NU), die den Produkthauptkörper (N) bildet, der für die Herstellung verwendet wird, und in einem anderen Prozess zum Überprüfen der Einheit (OU) nach einer Zerlegung verwendet wird.

20. Verfahren zum Zerlegen und Zusammenbauen eines Produkts nach irgendeinem der Ansprüche 11 bis 19,
wobei die gemeinsam verwendete Verarbeitungseinrichtung Arbeiten gleicher Art ausführt unter Verwendung einer Teileüberprüfungseinrichtung (11), die gemeinsam in einem Prozess zum Überprüfen der neu-gebildeten Teile (NP), die den Produkthauptkörper (N) konstruieren, und der Einheiten (NU), die den Produkthauptkörper (N) konstruieren, der für die Herstellung verwendet wird, und in einem anderen Prozess zum Überprüfen der (OP) Teile nach einem Zusammenbau verwendet wird.

## Revendications

1. Système de désassemblage et d'assemblage de produit comprenant:
un équipement de production pour réaliser un premier processus de production d'un produit (N); et
un premier équipement de traitement pour réaliser un second processus de désassemblage d'un produit utilisé (O) selon des unités (OU) et des parties (OP) et pour fournir les unités (OU) et les parties (OP) ainsi désassemblées pour produire le produit (NP),
dans lequel ledit système d'assemblage et de désassemblage de produit comprend en outre un équipement de traitement utilisé de façon commune qui est adapté pour être utilisé de façon commune pour la mise en oeuvre de à la fois un travail réversible de façon mutuelle et un travail de même type entre ledit premier processus de production du produit (N) et ledit second processus de désassemblage du produit utilisé (O) selon les unités (OU) et les parties (OP), où ledit équipement de traitement utilisé de façon commune est configuré pour réaliser le travail réversible de façon mutuelle et le travail de même type en mettant en oeuvre une opération réversible et une opération de même type, **caractérisé en ce que** ledit équipement utilisé de façon commune met en oeuvre un travail réversible de façon mutuelle en utilisant un équipement d'assemblage et de désassemblage de corps principal (2) utilisé de façon commune selon un processus de réalisation du premier processus de production en assemblant les unités (NU) et les parties (NP) constituant le corps principal de produit (N) et selon le second processus de désassemblage dudit produit utilisé (O) selon les unités (OU) et les parties (OP) ou en utilisant
un équipement d'assemblage et de désassemblage d'unité (3) utilisé de façon commune selon le premier processus d'assemblage des parties (NP) constituant les unités (NU) et selon le second processus de désassemblage des unités (OU) selon des parties (OD) ou en utilisant les deux.

2. Système de désassemblage et d'assemblage de produit selon la revendication 1, comprenant au moins un type d'équipement utilisé de façon commune qui est configuré de manière à être commandé par un ordinateur (22) et dans lequel
ledit système de désassemblage et d'assemblage de produit comprend en outre un dispositif de permutation pour permuter le programme qui est utilisé dans ledit ordinateur (22) et les données qui sont utilisées dans ledit programme afin de réaliser ledit premier processus de production du produit (N) ou afin de réaliser ledit second processus de désassemblage du produit utilisé (O) selon des unités (OU) et des parties (OP) et pour fournir les unités et les parties ainsi désassemblées pour produire le produit (N).

3. Système de désassemblage et d'assemblage de produit selon la revendication 2, comprenant une dite pluralité de types d'équipements utilisés de façon commune qui sont configurés de manière à être commandés par ledit ordinateur (22) et dans lequel
ledit dispositif de permutation permet de réaliser, dans un unique système, ladite opération de permutation de ladite pluralité d'équipements utilisés de façon commune.

4. Système de désassemblage et d'assemblage de produit selon l'une quelconque des revendications 1 à 3, dans lequel l'équipement de traitement utilisé de façon commune met en oeuvre le même type de travail en utilisant un entrepôt de stockage d'unité (6) qui est utilisé de façon commune selon un processus consistant à conserver de façon temporaire les unités nouvellement réalisées (NU) qui constituent le corps principal de produit (N) comme utilisé pour la production et selon un autre processus consistant à conserver de façon temporaire les unités (OU) après le désassemblage.

5. Système de désassemblage et d'assemblage de produit selon l'une quelconque des revendications 1 à 4, dans lequel
l'équipement de traitement utilisé de façon commune met en oeuvre le même type de travail en utilisant un entrepôt de stockage de parties (8) qui est utilisé de façon commune selon un processus consistant à conserver de façon temporaire les parties nouvellement réalisées (NP) qui constituent le corps principal de produit (N) ou les unités (NU) qui constituent le corps principal de produit (N) comme utilisé pour la production et selon un autre processus consistant à conserver de façon temporaire lesdites parties (OP) après le désassemblage.

6. Système de désassemblage et d'assemblage de produit selon la revendication 1, dans lequel:
l'équipement de traitement utilisé de façon commune met en oeuvre un même type de travail en utilisant un entrepôt de stockage d'unité (6) qui est utilisé de façon commune selon un processus consistant à conserver de façon temporaire les unités nouvellement réalisées (NU) qui constituent le corps principal de produit (N) comme utilisé pour la production et selon un autre processus consistant à conserver de façon temporaire les unités (OU) après le désassemblage; et dans lequel
l'équipement de traitement qui est utilisé de façon commune met en outre en oeuvre un même type de travail en utilisant un dispositif de convoyage (5) qui est utilisé de façon commune selon un processus de convoyage des unités (OU) depuis ledit équipement d'assemblage et de désassemblage de corps principal (2) jusqu'audit entrepôt de stockage d'unité (6) et selon un autre processus de convoyage des unités depuis ledit entrepôt de stockage d'unité (6) jusqu'audit équipement d'assemblage et de désassemblage de corps principal (2).

7. Système de désassemblage et d'assemblage de produit selon la revendication 1, dans lequel:
l'équipement de traitement utilisé de façon commune met en oeuvre un même type de travail en utilisant un entrepôt de stockage de parties (8) qui est utilisé de façon commune selon un processus consistant à conserver de façon temporaire les parties nouvellement réalisées (NP) qui constituent le corps principal de produit (N) et les unités (NU) qui constituent le corps principal de produit (N) comme utilisé pour la production et selon un autre processus consistant à conserver de façon temporaire les parties (OP) après désassemblage; et dans lequel
l'équipement de traitement qui est utilisé de façon commune met en oeuvre le même type de travail en utilisant un dispositif de convoyage (5) qui est utilisé de façon commune selon un processus de convoyage des parties (OP) depuis ledit équipement d'assemblage et de désassemblage d'unité (3) jusqu'audit entrepôt de stockage de parties (8) et selon un autre processus de convoyage des parties (NP) depuis ledit entrepôt de stockage de parties (8) jusqu'audit équipement d'assemblage et de désassemblage d'unité (3).

8. Système de désassemblage et d'assemblage de produit selon l'une quelconque des revendications 1 à 8, dans lequel
l'équipement de traitement qui est utilisé de façon commune met en oeuvre un même type de travail en utilisant un équipement de vérification de corps principal (13) qui est utilisé de façon commune selon un processus de vérification du corps principal de produit (N) après la production et selon un autre processus de vérification du corps principal de produit utilisé (O).

9. Système de désassemblage et d'assemblage de produit selon l'une quelconque des revendications 1 à 8, dans lequel
l'équipement de traitement qui est utilisé de façon commune met en oeuvre un même type de travail en utilisant un équipement de vérification d'unité (12) qui est utilisé de façon commune selon un processus de vérification de l'unité nouvellement réalisée (NU) qui constitue le corps principal de produit (N) comme utilisé pour la production et selon un autre processus de vérification de l'unité désassemblée (OU).

10. Système de désassemblage et d'assemblage de produit selon l'une quelconque des revendications 1 à 9, dans lequel
l'équipement de traitement qui est utilisé de façon commune met en oeuvre un même type de travail en utilisant un équipement de vérification de parties (11) qui est utilisé de façon commune selon un processus de vérification des parties nouvellement réalisées (NP) qui constituent le corps principal de produit (N) et de l'unité (NU) qui constitue le corps principal de produit (N), les deux étant utilisées pour la production, et selon un autre processus de vérification des parties (OP) après assemblage.

11. Procédé de désassemblage et d'assemblage d'un produit comprenant les étapes de:
réalisation d'un premier processus de production du produit (N) au moyen de l'utilisation d'un équipement de production;
réalisation d'un second processus de désassemblage du produit utilisé (O) selon des unités (OU) et des parties (OP) au moyen de l'utilisation d'un premier équipement de traitement; et
fourniture des unités (OU) et des parties (OP) ainsi désassemblées pour la production du produit (N),
dans lequel:
un équipement de traitement qui est utilisé de façon commune est utilisé de façon commune pour la mise en oeuvre de à la fois un travail mutuellement réversible et des mêmes types de travaux entre ledit premier processus de production du produit (N) et ledit second processus de désassemblage du produit utilisé (O) selon l'unité (OU) et les parties (OP), et dans lequel
ledit second équipement de traitement réalise le travail réversible et le même type de travail en mettant en oeuvre une opération réversible et une opération de même type,
**caractérisé en ce que** l'équipement de traitement qui est utilisé de façon commune met en oeuvre un travail mutuellement réversible qui utilise un équipement d'assemblage et de désassemblage de corps principal (2) qui est utilisé de façon commune selon le premier processus d'assemblage des unités (NU) et des parties (NP) qui constituent le corps principal de produit (N) et selon le second processus de désassemblage dudit produit utilisé (O) selon les unités (OU) ou les parties (OP) ou qui utilise un équipement d'assemblage et de désassemblage d'unité (3) qui est utilisé de façon commune selon le premier processus d'assemblage du corps principal de produit (N) ou de l'unité (NU) qui constitue le corps principal de produit (N) et selon le second processus de désassemblage des unités (OU) qui constituent le produit utilisé (O) et le corps principal du produit utilisé selon des parties (OP) ou qui utilise les deux.

12. Procédé de désassemblage et d'assemblage d'un produit selon la revendication 11,
comprenant l'utilisation d'au moins un type dudit équipement utilisé de façon commune qui est commandé par un ordinateur; et dans lequel
ledit procédé de désassemblage et d'assemblage d'un produit comprend en outre l'étape de permutation du programme qui est utilisé dans ledit ordinateur et des données qui sont utilisées dans ledit programme pour réaliser le processus de production et pour réaliser le processus de désassemblage.

13. Procédé de désassemblage et d'assemblage d'un produit selon la revendication 12,
comprenant l'utilisation d'une pluralité de types d'équipements utilisés de façon commune qui sont commandés par ledit ordinateur; et dans lequel
ladite étape de permutation permet de réaliser, dans un unique système, l'opération de permutation de ladite pluralité d'équipements utilisés de façon commune.

14. Procédé de désassemblage et d'assemblage d'un produit selon l'une quelconque des revendications 11 à 13, dans lequel
l'équipement de traitement qui est utilisé de façon commune met en oeuvre un même type de travail en utilisant un entrepôt de stockage d'unité (6) qui est utilisé de façon commune selon un processus consistant à conserver de façon temporaire des unités nouvellement réalisées (NU) pour construire le corps principal de produit (N) qui est utilisé pour la production et selon un autre processus consistant à conserver de façon temporaire les unités (OU) après désassemblage.

15. Procédé de désassemblage et d'assemblage d'un système selon l'une quelconque des revendications 11 à 14, dans lequel
l'équipement de traitement qui est utilisé de façon commune met en oeuvre un même type de travail en utilisant un entrepôt de stockage de parties (8) qui est utilisé de façon commune selon un processus consistant à conserver de façon temporaire les parties nouvellement réalisées (NP) constituant le corps principal de produit (N) ou l'unité (NU) constituant le corps principal de produit (N) comme utilisé pour la production, et selon un autre processus consistant à conserver de façon temporaire les parties (OP) après désassemblage.

16. Procédé de désassemblage et d'assemblage d'un produit selon la revendication 11, dans lequel:
l'équipement de traitement qui est utilisé de façon commune met en oeuvre un même type de travail en utilisant un entrepôt de stockage d'unité (8) qui est utilisé de façon commune selon un processus consistant à conserver de façon temporaire les unités nouvellement réalisées (NU) qui constituent ledit corps principal de produit (N) qui est utilisé pour la production et selon un autre processus consistant à conserver de façon temporaire lesdites unités (OU) après désassemblage; et dans lequel
l'équipement de traitement qui est utilisé de façon commune met en outre en oeuvre un même type de travail en utilisant un dispositif de convoyage (5) qui est utilisé de façon commune selon un processus de convoyage d'unités (OU) depuis ledit équipement d'assemblage et de désassemblage de corps principal (2) jusqu'audit entrepôt de stockage d'unité (8) et selon un autre processus de convoyage d'unités (NU) depuis ledit entrepôt de stockage d'unité (8) jusqu'audit équipement d'assemblage et de désassemblage de corps principal (2).

17. Procédé de désassemblage et d'assemblage d'un produit selon la revendication 11, dans lequel
l'équipement de traitement qui est utilisé de façon commune met en oeuvre un même type de travail en utilisant un entrepôt de stockage de parties (8) qui est utilisé de façon commune selon un processus consistant à conserver de façon temporaire les parties nouvellement réalisées (NP) qui constituent le corps principal de produit (N) ou les unités (NU) qui constituent le corps principal de produit (N) comme utilisé pour la production et selon un autre processus consistant à conserver de façon temporaire lesdites parties (OP) après désassemblage; et dans lequel
l'équipement de traitement qui est utilisé de façon commune met en oeuvre un même type de travail en utilisant un dispositif de convoyage (5) qui est utilisé de façon commune selon un processus de convoyage des parties (OP) depuis ledit équipement d'assemblage et de désassemblage d'unité (3) jusqu'audit entrepôt de stockage de parties (8) et selon un autre processus de convoyage des parties (NP) depuis ledit entrepôt de stockage de parties (8) jusqu'audit équipement d'assemblage et de désassemblage d'unité (3).

18. Procédé de désassemblage et d'assemblage d'un produit selon l'une quelconque des revendications 11 à 17, dans lequel
l'équipement de traitement qui est utilisé de façon commune met en oeuvre un même type de travail en utilisant un équipement de vérification de corps principal (13) qui est utilisé de façon commune selon un processus de vérification du corps principal de produit (N) après la production et selon un autre processus de vérification du corps principal de produit utilisé (O).

19. Procédé de désassemblage et d'assemblage d'un produit selon l'une quelconque des revendications 11 à 18, dans lequel
l'équipement de traitement qui est utilisé de façon commune met en oeuvre un même type de travail en utilisant un équipement de vérification d'unité (12) qui est utilisé de façon commune selon un processus de vérification de l'unité nouvellement réalisée (NU) qui constitue le corps principal de produit (N) comme utilisé pour la production et selon un autre processus de vérification de l'unité (OU) après désassemblage.

20. Procédé de désassemblage et d'assemblage d'un produit selon l'une quelconque des revendications 11 à 19, dans lequel
l'équipement de traitement qui est utilisé de façon commune met en oeuvre un même type de travail en utilisant un équipement de vérification de parties (11) qui est utilisé de façon commune selon un processus de vérification des parties nouvellement réalisées (NP) qui constituent le corps principal de produit (N) et des unités (NU) qui constituent le corps principal de produit (N) comme utilisé pour la production et selon un autre processus de vérification desdites parties (OP) après assemblage.
